Europäisches Patentamt

European Patent Office

Office européen des brevets

(11) Publication number: **0 190 933**
**A2**

# (12) EUROPEAN PATENT APPLICATION

(21) Application number: **86300800.9**

(22) Date of filing: 06.02.86

(51) Int. Cl.⁴: **F 16 L 55/10**
**E 03 F 3/06**

(30) Priority: 06.02.85 GB 8502971

(43) Date of publication of application:
**13.08.86 Bulletin 86/33**

(84) Designated Contracting States:
**CH DE FR GB LI**

(71) Applicant: **BRICKHOUSE DUDLEY PLC**
**102 Dudley Road West**
**Tipton West Midlands DY4 7XD(GB)**

(72) Inventor: **Brough, Ian James**
**c/o E W Avent Limited Port Marsh Road**
**Clane Wiltshire, SN11 9BW(GB)**

(72) Inventor: **Martin, John**
**2 Mowbray Street Epworth**
**Nr Doncaster, BN9 1HR(GB)**

(72) Inventor: **Holmes, Derek**
**32A Oxtalis Drive Long Ledens**
**Gloucestershire(GB)**

(74) Representative: **Harrison, Michael Robert et al,**
**URQUHART-DYKES & LORD 5th Floor Tower House**
**Merrion Way**
**Leeds LS2 8PA West Yorkshire(GB)**

(54) **Pipe replacement.**

(57) A device for inserting within an existing pipe to shatter the existing pipe and replace it with a new pipe comprises a front portion 1 and a separate rear portion 2. The rear portion 2 includes a hydraulically operated hammer which is kept in engagement with a part of the front portion 1 by means of tension applied to the rear portion 2 through cables 9, 9A. The hydraulic hammer causes the front portion 1 to vibrate relative to the rear portion 2, and this vibration causes shattering of the existing pipe, whilst the tension applied through the cables 9, 9A ensures that the device is driven through the existing pipe.

FIG.1.

EP 0 190 933 A2

## PIPE REPLACEMENT

This invention relates to a method and apparatus for replacing underground pipes, in particular non-pressurised pipes such as water or sewage pipes.

Existing water or sewage pipes need to be replaced either because of a need for the carrying capacity of the pipe to be increased or because of general pipe deterioration due to the effects of traffic, acid attack, ground movement etc.

European Patent Specification No 53480 describes a device which is guided by a cable through an existing pipe and which has radially extending blades on the front portion of the device, these blades serving to engage the inside wall of the existing pipe. The device includes a pneumatically operated hammer which is enclosed within an external housing of the device and has surfaces which act percussively on corresponding surfaces of an internal bore within the device to cause the blades to fracture the existing pipe. The device includes means to attach a new pipe or liner to the rear of the device so that as the existing pipe is broken, the new pipe is towed along behind the device. The cable is attached to the front portion of the device and serves to guide the device axially through the existing pipe.

There are several disadvantages with this device. Because the pneumatic hammer is relatively inefficient, the size of the hammer needs to be quite large to create the required effect. This means that the device is heavy and difficult to handle.

The use of a pneumatic mechanism means that the device cannot be operated successfully when it is submerged in water or sewage, since the pneumatic mechanism will be choked by any ingress of water or sewage.

Because the pipe fracturing is brought about by intense localised pressure exerted by the blades when the device is acted on by the pneumatic hammer, the disturbance to the surrounding ground is considerable.

It is the purpose of the present invention to provide a method for replacing existing pipes, either with a new pipe of equal diameter or a new pipe of larger diameter, which can be used  for example with live sewers, i.e. filled with sewage, can reduce excavation costs by being operable from manhole to manhole, these typically being between 20 or 30 meters to over 100 meters apart, so reducing excavation costs, may easily be handled by two men, and causes less damage to the surrounding ground.

According to a first aspect of the present invention there is provided a device for replacing an existing pipe with a new pipe, the device comprising a front portion for engaging the internal walls of the existing pipe, a rear portion having means for attaching thereto a new pipe, said front and rear portions being without any structural connection therebetween but, at least in use, being held in mutual engagement by means of at least one flexible elongate member through which a force is applied to hold the rear portion in engagement with the front portion, the device including means for vibrating the front portion relative to the rear portion at a frequency sufficient to shatter the existing pipe.

What is meant by there being no structural connection between the front and rear portions is that if the front portion were to be pulled forwards by a force applied to the front portion, the rear portion would stay where it was.  The front and rear portions, however, are held in mutual engagement when the device is being operated, by applying a forward force to the rear portion.

The device is driven through the existing pipe by vibrating the front portion of the device relative to the rear portion whilst maintaining the front and rear portions in engagement by applying a forward force to the rear portion. This force is applied through the or each flexible elongate element for example a cable attached to the rear portion, or alternatively passing around the back of the rear portion.

The device shatters the existing pipe by vibrating the front portion relative to the rear portion at a frequency sufficient to cause shock waves in the existing pipe. Because the existing pipe is shattered by vibration rather than fractured by a percussive force transmitted to the pipe by radially extending blades, the disturbance to the surrounding ground is minimised.

The new pipe may be a replacement pipe of the same diameter as or a larger diameter than the existing pipe, or may be an outer sleeve for replacement pipe.

Preferably the means to vibrate the front portion relative to the rear portion comprises an hydraulically operated hammer located within the rear portion.

Preferably, the hammer has a short stroke and operates at a high strike rate. Preferably, the strike rate is at least 1,500 strikes per minute, with the most preferred rate being 2,400 strikes per minute.

Because the device uses an efficient hydraulic mechanism, it is of dimensions and weight suitable for handling by two operatives, and is small enough to be operated from manhole to manhole with a minimum of excavation.

The device is operable completely submerged under water or sewage, since the hydraulic mechanism is more resistant to the effects of water or sewage entering the device. The device is moved through the pipe, shattering it and towing behind a new pipe. Subsequent lengths of new pipe are joined on to the free end of the previous length of pipe as necessary.

According to a second aspect of the present invention there is provided a method of replacing an existing pipe with a new pipe, the method comprising inserting within the existing pipe a device having a front portion for engaging the internal walls of the existing pipe, a rear portion having means for attaching thereto a new pipe, and means for vibrating the front portion relative to the rear portion at a frequency sufficient to shatter the existing pipe, said front and rear portions being without any structural connection therebetween, keeping said front and rear portions in mutual engagement by applying a force through at least one flexible elongate member to the rear portion of the device which tends to hold the rear portion in engagement with the front portion, and simultaneously vibrating the front portion relative to the rear portion whereby the device is driven along and shatters the existing pipe.

The device preferably includes at the front portion one inlet hose and one outlet hose carrying hydraulic fluid to and from the hydraulically operated hammer.

The device preferably has attached to the front portion a rigid tubular member through which the inlet and outlet hydraulic hoses pass, the rigid tubular member serving to protect the hydraulic hoses from damage caused by collapse of the existing pipe ahead of the device.

The device may be adapted so as to prevent ingress of soil, water, sewage and the like, so minimising the risk of failure whilst the device is working submerged.

Embodiments in accordance with the present invention will now be described, by way of example only, with reference to the accompanying drawings in which:-

Figure 1 is a partially cut away sectional view of a device in accordance with the present invention;

Figure 2 is a perspective view of a driving dog of a device in accordance with the present invention;

Figure 3 is a perspective view of closure collets of a device in accordance with the present invention;

Figure 4 is a perspective view of a manifold of a device in accordance with the present invention; and,

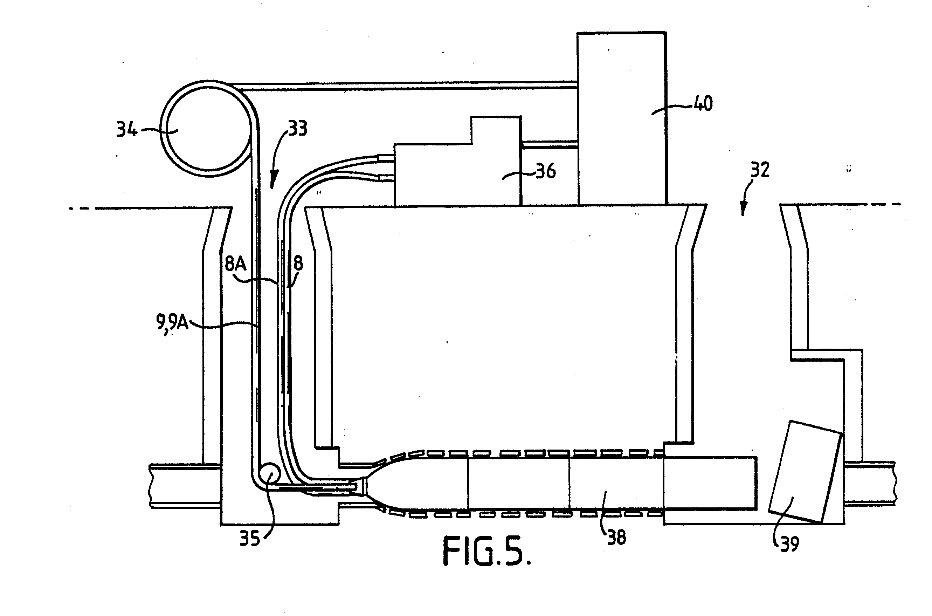

Figure 5 is a schematic drawing showing a method in accordance with the present invention.

A device in accordance with the present invention comprises a front portion 1, and a rear portion 2. The front portion 1 has an outer casing 6 of conical shape, typically of steel, which, in use, engages the internal walls of the existing pipe.

At the forwardmost end of the front casing 6 there is a set of closure collets 7 which effectively seal off the inside of the device from ingress of soil, water, sewage or other substances whilst allowing two hydraulic hoses 8, 8A, one inlet and one outlet, and two cables 9, 9A, one close to each side of the inner surface of the casing 6, to be fixed into position. This enclosed structure allows the device to be used completely submerged.

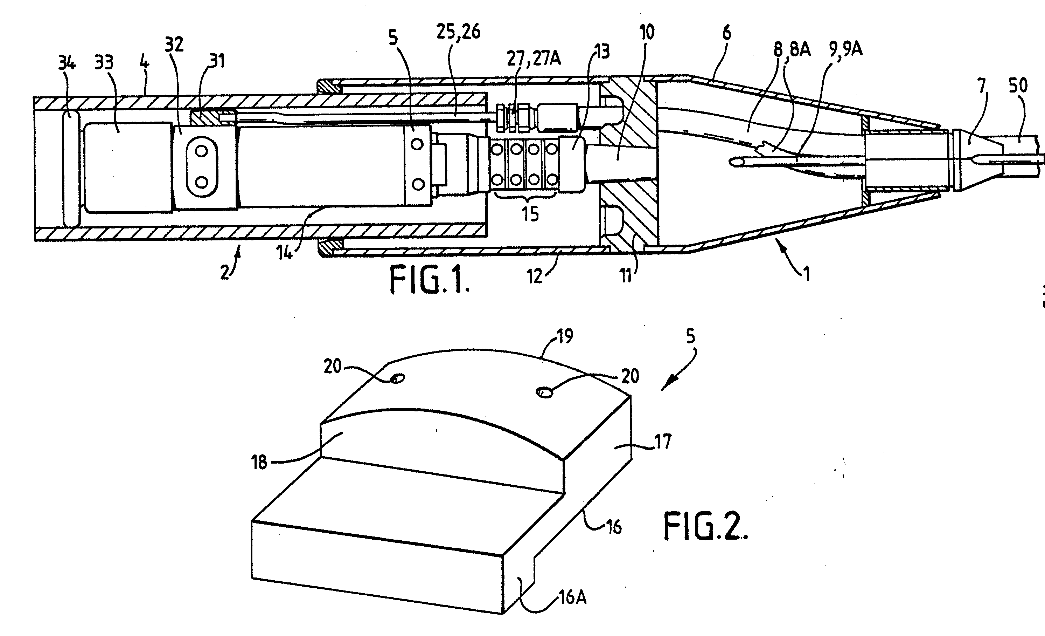

The front portion 1 has either formed integrally with, or arranged for a locking taper fit within member 11, a shaft 10 which tapers inwardly towards its forwardmost end. The member 11 has four holes drilled through it, two holes accommodating the hydraulic inlet and outlet hoses 8, 8A and two holes accommodating the cables 9, 9A. The shaft 10, in the embodiment shown in Figure 1, is tapered to a locking fit within a hole in the centre of the member 11. In operation, the shaft 10 remains almost motionless serving to convert the translational energy provided by the hydraulic mechanism within the rear portion 2 into vibrational energy of the front portion 1.

The rear portion 2 comprises a casing 14 of square cross-section and typically of aluminium within which is housed a hydraulically operated hammer 13. The details of the workings of the hydraulic hammer are not discussed here in detail as they are known to one skilled in this particular field. In operation, the rearmost end of the shaft 10 is kept in engagement with the head of the hammer by applying a force through the two cables 9, 9A. A number of keep plates 15 having tightening screws are positioned along opposite sides of the casing 14 which fix the ends of the cables 9, 9A rigidly against the sides of the casing 14, thus allowing the hammer head to be kept in engagement with the rearmost end of the shaft 10 by applying tension to the cables 9, 9A.

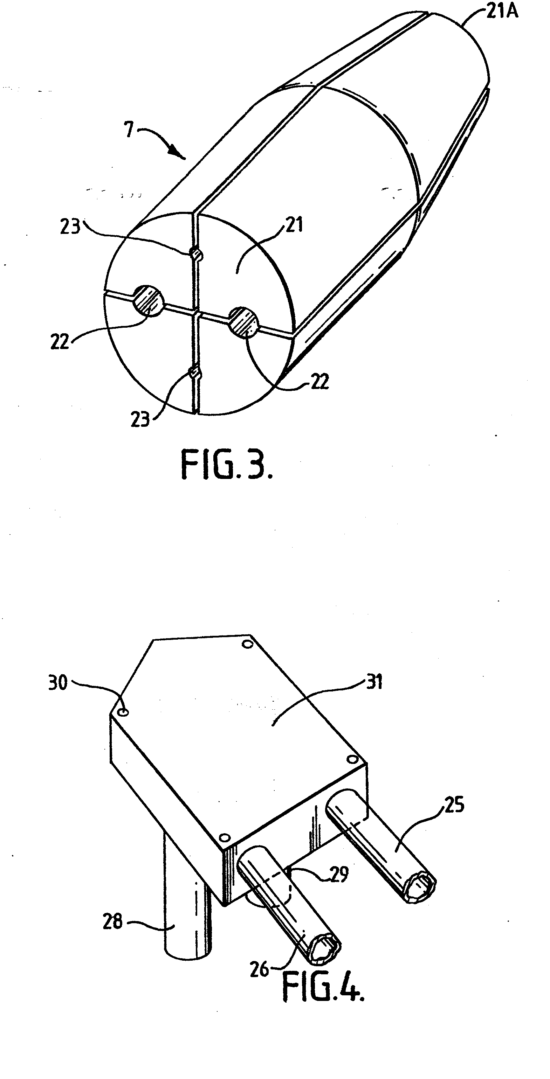

At the front end of the casing 14 there are bolted in opposed positions one on each of the two opposed outer faces of the casing 14 a pair of driving dogs 5. These have the general configuration shown in Figure 3, consisting of a block having a lower surface 16 which is bolted through holes 20 against a face of the casing 14 such that the overhang 16A fits inside the hollow casing 14 and an outer portion 17 which connects two surfaces 18 and 19. A length of replacement pipe 4 is secured onto the device by cutting two windows in opposite sides of the pipe 4, sliding the pipe 4 onto the device, dropping the dogs through the window and bolting them tightly against casing 14 such that the surfaces 18 and 19 engage the cut edges of the windows in the pipe 4, thus allowing a section of replacement pipe to be pulled along behind the device. These dogs 5 serve to take the strain on each corner of the casing 14. Typically, this section of replacement pipe 4, which may be of any desired length, is left in position and subsequent lengths of replacement pipe are butt-fused to the free end of the fixed section of pipe.

With reference to Figures 1 and 3, the closure collets 7 are made from four separate square bars, which are clamped together and drilled with two large holes 22 to accommodate the hydraulic hoses 8, 8A and two smaller holes 23 to accommodate the cables 9, 9A, the holes being drilled in the inner edges of the bars. The bars are then machined to have a circular outer surface which may then be further machined at one end to a reduced diameter, thus forming a cone or nose piece 21A.

With reference to  Figures 1 and 4, the hydraulic mechanism of the device, which is located in the rear portion 2 includes a manifold 31 which is connected to a valve block 32 controlling the oscillation of the hydraulic mechanism.  At the rear end of the valve block 32 there is an accumulator 33 having a reservoir of high pressure hydraulic fluid to ensure efficient first time starting.  A supporting ring 34 to centralise the hydraulic unit within the rear portion 3 is located at the rear end of the hydraulic mechanism, and the front end of the hydraulic mechanism is connected via the casing 14 to the hydraulic hammer.  The hydraulic inlet and outlet hoses 8, 8A are connected via couplers 27, 27A to rigid pipes 25, 26 typically steel.  These inlet and outlet pipes 25, 26 feed into the valve block 32 via a manifold 31 having two vertically positioned feed tubes 28, 29.  The manifold 31 is secured to the valve block 32 by bolting through holes 30 at each corner of the manifold.

The hydraulic fluid used is a very thin standard oil allowing maximum acceleration at the particular frequency of oscillation used.

The stroke of the hydraulic hammer is very short, and the hammer operates at a high strike rate, typically 2,400 strikes per minute.

In operation, the device is driven through and shatters the existing pipe by vibration of front portion 1 relative to the rear portion 2.  This is achieved by applying tension to the cables 9, 9A attached to the casing 14 which keeps the hammer head in engagement with the rearmost surface of the shaft 10.  The vibration of the front portion 1 which is in contact with the inside of the existing pipe walls causes shock waves in the pipe material and this results in the shattering of the pipe, and the tension applied to the cables 9, 9A ensure that the mole is driven along the pipe.

The device is driven forward by applying tension to cables 9, 9A whilst the device is being vibrated and the front portion is in engagement with the inside of the existing pipe walls.

An alternative arrangement is one in which the haulage ropes pass around the back of the rear portion of the device, instead of being attached to the casing 14. Since pipe shattering is effected by vibration rather than a radially directed outward bursting force, this method causes less structural damage to the surrounding ground.

The overall length of the device is approximately 1.0 meter, the front portion 1 being approximately 0.6 meters, so that it is of a size small enough to be easily handled by two men and lowered down a manhole. It should be appreciated that by suitable design, the overall length of the device may be shortened according to the particular working conditions.

With reference to Figure 6, the device is used in the following manner. Firstly, entry and exit manholes 32 and 33 are prepared in the usual way. The entry manhole 32 has to be excavated near its base to allow an operative to manoeuver the pipe sections in the manhole. The exit manhole needs less excavation, as the operative works from ground level. Next the cables 9, 9A and hydraulic hoses 8, 8A are dropped into the exit hole. These are then threaded through to the entry manhole using glass-fibre rope. The device is lowered into the entry manhole 32 and the hydraulic hose and cable connections are made. Next the hydraulic mechanism is started, and the device is aligned in position within the existing pipe. The device is driven along the existing pipe, shattering it, and towing behind it a length of replacement pipe 38, by winding the cables

0190933

9, 9A using a winch 34 and pulley 35. The same power unit 40 may drive both the winch 34 and the hydraulic supply unit 36. As pipe replacement progresses, subsequent lengths 39 of replacement pipe are butt-fused onto the end of the protruding replacement pipe.

If desired, a length of pipe 50 of smaller diameter than the pipe to be shattered may be fused to the nose piece, the inlet and outlet hoses and haulage ropes passing through this pipe so that they are protected from damage should the existing pipe collapse ahead of the device.

A further advantage of the device of the present invention arises from the fact that, in use, there are no connections extending rearwardly from the device. Accordingly, there is nothing to hinder the jointing of new pipe lengths.

0190933

CLAIMS

1. A device for replacing an existing pipe with a new pipe, the device comprising a front portion (1) for engaging the internal walls of the existing pipe, a rear portion (2) having means for attaching thereto a new pipe, characterised in that said front and rear portions are without any structural connection therebetween but, at least in use, being held in mutual engagement by means of at least one flexible elongate member (9, 9A) through which a force is applied to hold the rear portion (2) in engagement with the front portion (1), the device including means (13) for vibrating the front portion (1) relative to the rear portion (2) at a frequency sufficient to shatter the existing pipe.

2. A device according to Claim 1 characterised in that the means to vibrate the front portion relative to the rear portion comprises a hydraulically operated hammer (13) located within the rear portion.

3. A device according to Claim 2 characterised in that the hammer (13) has a short stroke and operates at a high strike rate.

4. A device according to Claim 2 or Claim 3 characterised in that at least one inlet and at least one outlet hose (8, 8A) carrying hydraulic fluid to and from the hydraulically operated hammer.

5. A device according to Claim 4 characterised in that there is attached to the front portion thereof a rigid tubular member (50) through which the inlet and outlet hoses (8, 8A) pass, the rigid tubular member serving to protect the hoses from damage caused by collapse of the existing pipe ahead of the device.

6. A method of replacing an existing pipe with a new pipe, the method being characterised in that is comprises inserting within the existing pipe a device having a front portion (1) for engaging the internal walls of the existing pipe, a rear portion (2) having means for attaching thereto a new pipe (38), and means (13) for vibrating the front portion relative to the rear portion at a frequency sufficient to shatter the existing pipe, said front and rear portions being without any structural connection therebetween, keeping said front and rear portions in mutual engagement by applying a force through at least one flexible elongate member (9, 9A) to the rear portion of the device which tends to hold the rear portion in engagement with the front portion, and simultaneously vibrating the front portion (1) relative to the rear portion (2) whereby the device is driven along and shatters the existing pipe.

7. A method according to Claim 6 characterised in that the new pipe (38) is of the same diameter as the existing pipe.

8. A method according to Claim 6 characterised in that the new pipe (38) is of a larger diameter than the existing pipe to serve as an outer sleeve for a subsequently inserted replacement pipe.

9. A method according to any of Claims 6 to 8 characterised in that the device is, in use, completely submerged under water or sewage within the existing pipe.

FIG.1.

FIG.2.

0190933

21A

7

23

21

22

23

22

FIG.3.

30

31

25

29

28

26

FIG.4.

FIG.5.

34    33    36    40    32    8A    8    9,9A    35    38    39